# EUROPEAN PATENT SPECIFICATION

(11) **EP 2 458 760 B1**
(45) Date of publication and mention of the grant of the patent: **08.05.2019**
(21) Application number: 10788933.9
(22) Date of filing: 13.06.2010
(51) Int. Cl.: H04B 1/7113, H04J 13/00, H04B 7/216, H04B 1/7085

(54) **MULTIPATH SEARCHING METHOD AND DEVICE**
VERFAHREN UND VORRICHTUNG FÜR MEHRWEGSUCHE
PROCEDE ET DISPOSITIF DE RECHERCHE MULTI-TRAJETS

(30) Priority: 26.10.2009 CN 200910180335
(43) Date of publication of application: 30.05.2012
(73) Proprietor: Sanechips Technology Co., Ltd., Shenzhen, Guangdong 518055 (CN)
(72) Inventor: ZHAO, Tianhong, Shenzhen Guangdong 518057 (CN); GUAN, Huabo, Shenzhen Guangdong 518057 (CN); YAN, Xiaowei, Shenzhen Guangdong 518057 (CN)
(74) Representative: J A Kemp
(86) International application number: PCT/CN2010/073967
(87) International publication number: WO 2010/145537

(56) References cited:
- EP-A2- 0 820 156
- WO-A1-2005/064833
- CN-A- 1 529 444
- CN-A- 101 072 046
- CN-A- 101 123 462
- CN-A- 101 123 462
- CN-A- 101 136 653
- US-B1- 6 570 909
- HAIYAN XU; GUIBAO LI: "Automatically Translated by the Intellectual Property Publishing House of SIPO", , 1 January 2014 (2014-01-01), page 14, XP055102246, Retrieved from the Internet: URL:http://tfly.internal.epo.org/index.htm l?num=CN101123462B&type=PN&FAM1=CN10112346 2B/TXTCNT [retrieved on 2014-02-14]

## Description

The present invention relates to the communication field, and particularly, to a method and an apparatus for multipath searching.

In the wireless communication base station, there is a need to process the communication to multiple users. The base station needs to search multiple multipath signals of each mobile phone from the received multiple signals and noises of the mobile phone user. In these searched multipath signals, there is a need to eliminate the noise interference for the multipath signals and the interference between the multiple paths. R8 protocol of the 3GPP puts forward a higher performance requirement which could not be satisfied by the traditional searcher, so a higher accuracy searcher is needed to realize the searching and demodulation for the high speed uplink packet access (HSUPA) high speed data. In order to satisfy requirements of performance and user number, the performance and the complexity of implementation need to be taken into account.

In the prior art, the traditional searcher supporting the R99 protocol does not have searching for the enhanced dedicated channel (E-DCH) dedicated physical control channel (EDPCCH); and for the searching for the dedicated physical control channel (DPCCH), after 8 paths with the strongest energy are selected, only the processes of interpolation and limiting the scope of multipath are implemented, and they are sent to a demodulation module. The advantages of the traditional searcher are: implementing less resource consumption, being able to meeting requirement of the demodulation performance of the voice channel, but the traditional searcher cannot satisfy requirement for the demodulation performance of high speed internet data of the existing R8 protocol.

The traditional searcher supporting the R99 protocol does not perform operations of filtering and eliminating the dense path interference to two or more times sampled data; but the traditional searcher adopts threshold interpolation to the double sampled data directly according to the energy of path position, calculates a ratio of the energy difference between the early path and the late path to the energy of the middle path, and directly adjusts the phase according to the different interval range at which the ratio is. In which, there is no filtering operation, only the problem of the samples being insufficient is solved, while noise at a certain frequency was not eliminated, and the dense path generated in the early, middle and late paths was not processed. Wherein the dense path interference and the noise path interference will influence
the performance of the searcher and increase the error rate.

The patent, the patent number of which is US6570909, proposes a method for counteracting interference in a CDMA communication, however, there is no feasible processing method for filtering to eliminate the dense path proposed in an actual device in particular.

The patent application, the publication number of which is CN101123462A, discloses "a method for multipath searching and interpolating of a direct spreading code division multiple address system". This method states a method for eliminating the dense path on algorithm, but dose not illustrate how to interpolate the data that is 2 times sampled to octuple sampling precision. During the multipath searching, a peak position interpolation based on an early-middle-late path principle is performed to the double sampled peak amplitude delay profile, wherein, for the peak amplitude delay profiles that exist the dense adjacent path, however, the coefficient of the filter and the hash lookup table in filtering are not designed specifically, and the curve fitting is used for the whole envelope during eliminating the dense path. In principle, a high precision searcher is realized, but the calculation quantity could not be reduces, and the interpolation of double to octuple sampling points and curve fitting envelope of multiple points occupy a lot of resource, thus it is difficult to guarantee data searching of multiple mobile phone users.

The present invention provides a method and an apparatus for multipath searching as defined in claims 1 and 9, respectively, to realize improving the searching precision of the searcher and reducing the computation.

Specifically, a method for multipath searching is provided by the present invention, comprising:
in a process of the multipath searching, performing an interpolation process with value 0 to a sampled peak amplitude delay profile (ADP) set, and performing a filtering process to the interpolated peak ADP set;
judging whether a dense path exists in the interpolated and filtered peak ADP set, if the dense path exists in the interpolated and filtered peak ADP set, selecting a point to be interpolated from each of early, middle and late paths of each peak ADP in the interpolated and filtered peak ADP set, and performing an eliminating dense adjacent path interference process to the three selected points to be interpolated; and
based on an early-middle-late path principle, performing a peak position interpolation to the three points to be interpolated after performing the eliminating dense adjacent path interference process, to adjust a peak position of each peak ADP, and saving the adjusted peak
   position.

Before the step of performing the interpolation process with value 0 to the sampled ADP set, the method optionally further comprises:
performing a correlation computation with different time delays to a received base band signal with a local scrambling code and a pilot frequency to obtain ADP;
performing an infinite impulse response (IIR) filtering to the ADP, and calculating an ADP noise threshold to the IIR filtered data; and
performing a peak selection according to the calculated ADP noise threshold to obtain the peak ADP set.

The step of performing the filtering process to the interpolated peak ADP set optionally comprises:
performing the filtering process to nonzero valid data in the interpolated peak ADP set by looking up a hash table, wherein the hash table saves the nonzero valid data after the interpolation process; or,
performing the filtering process to all the data in the interpolated peak ADP set by looking up an order table.

The step of selecting the point to be interpolated from each of early, middle and late paths of each peak ADP optionally comprises:
selecting the peak position of each peak ADP as the point to be interpolated of the middle path, selecting a position of the peak position minus a symmetrical position on both sides of the peak position as the point to be interpolated of the early path, and selecting a position of the peak position plus a symmetrical position on both sides of the peak position as the point to be interpolated of the late path.

The step of performing the eliminating dense adjacent path interference process to the three selected points to be interpolated optionally comprises:
taking the peak ADP at which the three points to be interpolated are located as the peak ADP to be adjusted, and performing a curve fitting to an early-late adjacent peak ADP except for the peak ADP to be adjusted at the three points to be interpolated, to obtain curve fitting data of the early-late adjacent peak ADP; and
the data corresponding to the three points to be interpolated in an envelope formed from the interpolated and filtered peak ADP set subtracting respectively the curve fitting data corresponding to the early-late adjacent peak ADP, to obtain the three points to be interpolated without dense adjacent path interference.

After the step of saving the adjusted peak position, the method further optionally comprises:
judging whether times of the eliminating dense adjacent path interference process reach threshold times of a preset eliminating dense adjacent path interference, if the times reach the threshold times, ending the flow; and if the times do not reach the threshold times, selecting the adjusted peak position of each peak ADP as the point to be interpolated of the middle path, selecting a position of the peak position minus the symmetrical position on both sides of the peak position as the point to be interpolated of the early path, selecting a position of the peak position plus the symmetrical position on both sides of the peak position as the point to be interpolated of the late path, performing the eliminating dense adjacent path interference process to the three selected points to be interpolated, and returning to the step of performing the peak position interpolation to the three points to be interpolated.

After the step of performing the filtering process to the interpolated peak ADP set, the method optionally further comprises:
when no dense path exists in the interpolated and filtered peak ADP set, performing the peak position interpolation to all of the peak ADPs in the peak ADP set directly based on the early-middle-late path principle, to adjust the peak position of each peak ADP, and saving the adjusted peak position.

The symmetrical position on both sides of the peak position is optionally 1/2 chip.

The present invention also provides an apparatus for multipath searching, comprising:
an interpolation and filtering unit, which is configured to: in a process of the multipath searching, perform an interpolation process with value 0 to a sampled peak amplitude delay profile (ADP) set, and perform a filtering process to the interpolated peak ADP set;
a dense path judgment unit, which is configured to: judge whether a dense path exists in the interpolated and filtered peak ADP set, if the dense path exists in the interpolated and filtered peak ADP set, trigger a dense adjacent path interference eliminating unit;
the dense adjacent path interference eliminating unit, which is configured to: when the dense path judgment unit determines that the dense path exists in the interpolated and filtered peak ADP set, select a point to be interpolated from each of early, middle and late paths of each peak ADP in the interpolated and filtered peak ADP set, and perform an eliminating dense adjacent path interference process to the three selected points to be interpolated; and
a first peak position adjustment unit, which is configured to: based on an early-middle-late path principle, perform a peak position interpolation to the three points to be interpolated after performing the eliminating dense adjacent path interference process, to adjust a peak position of each peak ADP, and save the adjusted peak position.

The apparatus provided by the present invention optionally further comprises a threshold judgment unit; wherein:
the first peak position adjustment unit is further configured to: trigger the threshold judgment unit after saving the adjusted peak position; and
the threshold judgment unit is configured to: judge whether times of the eliminating dense adjacent path interference process reach preset eliminating dense adjacent path interference threshold times, if the times reach the threshold times, end the flow; and if the times do not reach the threshold times, select the adjusted peak position of each peak ADP as the point to be interpolated of the middle path, select a position of the peak position minus the symmetrical position on both sides of the peak position as the point to be interpolated of the early path, select a position of the peak position plus the symmetrical position on both sides of the peak position as the point to be interpolated of the late path, perform the eliminating dense adjacent path interference process to the three selected points to be interpolated, and trigger the first peak position adjustment unit.

The apparatus provided by the present invention optionally further comprises a second peak position adjustment unit; wherein:
the dense path judgment unit is further configured to: if it is determined that no dense path exists in the interpolated and filtered peak ADP set, trigger the second peak position adjustment unit; and
the second peak position adjustment unit is configured to: when the dense path judgment unit determines that no dense path exists in the interpolated and filtered peak ADP set, perform the peak position interpolation to all the peak ADPs in the peak ADP set directly based on the early-middle-late path principle, to adjust the peak position of each peak ADP, and save the adjusted peak position.

The apparatus provided by the present invention optionally further comprises:
a peak ADP set obtaining module, which is configured to: perform a correlation computation with different delays to a received base band signal with a local scrambling code and a pilot frequency to obtain ADP; perform an infinite impulse response (IIR) filtering to the ADP, and calculate an ADP noise threshold according to the IIR filtered data; and perform a peak selection according to the calculated ADP noise threshold to obtain the peak ADP set.

The interpolation and filtering unit is optionally configured to perform the filtering process to the interpolated peak ADP set by the following way:
performing the filtering process to nonzero valid data in the interpolated peak ADP set by looking up a hash table, wherein the hash table saves the nonzero valid data after the interpolation process; or
performing the filtering process to all the data in the interpolated peak ADP set by looking up an order table.

The dense adjacent path interference eliminating unit is optionally configured to select the point to be interpolated from each of early, middle and late paths of each peak ADP by the following way:
selecting the peak position of each peak ADP as the point to be interpolated of the middle path, selecting a position of the peak position minus a symmetrical position on both sides of the peak position as the point to be interpolated of the early path, and selecting a position of the peak position plus a symmetrical position on both sides of the peak position as the point to be interpolated of the late path.

The dense adjacent path interference eliminating unit is optionally configured to perform the eliminating dense adjacent path interference process to the three selected points to be interpolated by the following way:
taking the peak ADP at which the three points to be interpolated are located as the peak ADP to be adjusted, and performing a curve fitting to an early-late adjacent peak ADP except for the peak ADP to be adjusted at the three points to be interpolated, to obtain curve fitting data of the early-late adjacent peak ADP; and
the data corresponding to the three points to be interpolated in an envelope formed from the interpolated and filtered peak ADP set subtracting respectively the curve fitting data of the early-late adjacent peak ADP, to obtain the three points to be interpolated without dense adjacent path interference.

The symmetrical position on both sides of the peak position is optionally 1/2 chip.

Compared with the prior art, the present invention has the following advantages:
the method provided by the present invention discloses a process of eliminating dense path by digital filtering interpolation with low computation; this process adopts a method of interpolating value 0 for filtering, and can perform the filtering process only to the nonzero valid data by looking up the hash table during the filter process, and the data with values 0 do not participate in the multiplication and addition and saving, thereby simplifying the computation greatly; in the process of eliminating dense adjacent path, the way of performing the purposive fitting and subtracting envelope to the three early-middle-late points that need to be interpolated is adopted, which guarantees the performance while greatly simplifying the computation.

### Brief Description of Drawings

In order to illustrate the embodiments of the present invention or the technical scheme in the prior art more clearly, the drawings needed in the embodiments or the description of the prior art will be described briefly; it is obvious that the drawings in the following description are only some embodiments of the present invention, and for the ordinary skilled in the art, other drawings may be obtained according to these drawings without any creative work.
FIG. 1 is a flow chart of a method for multipath searching provided by the present invention;
FIG. 2 is a flow chart of a method for multipath searching provided by an embodiment of the present invention;
FIG. 3 is a schematic diagram for eliminating dense path provided by an embodiment of the present invention;
FIG. 4 is an effect diagram of eliminating dense path once in an embodiment of the present invention;
FIG. 5 is an effect diagram of eliminating dense path twice in an embodiment of the present invention;
FIG. 6 is an effect diagram of eliminating dense path thrice in an embodiment of the present invention; and
FIG. 7 is a structure diagram of an apparatus for multipath searching provided by the present invention.

The technical scheme in the embodiments of the present invention will be described clearly and completely in combination with the drawings in the embodiments of the present invention in the following, and the described embodiments are obviously part of the embodiments of the present invention but not the whole embodiments. Based on the embodiments in the present invention, all of other embodiments, which are obtained by the ordinary skilled in the art without any creative work, fall into the protection scope of the present invention.

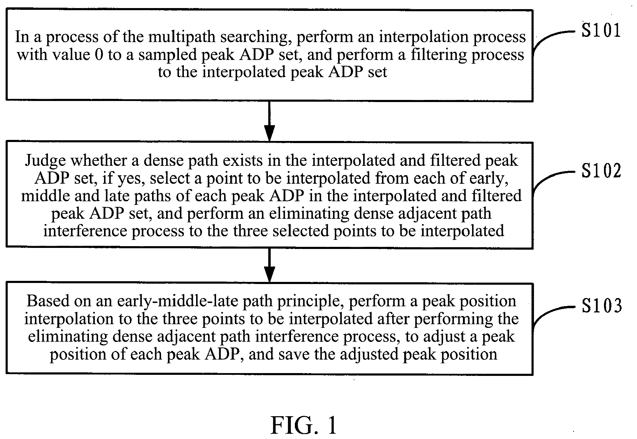

In order to improve the calculation precision of the searcher and reduce the computation, the present invention provides a method and an apparatus for multipath searching. As shown in FIG. 1, it is a flow chart of a method for multipath searching provided by the present invention, and specifically includes the following steps:
step S101, in a process of the multipath searching, an interpolation process with value 0 is performed to a sampled peak amplitude delay profile (ADP) set, and a filtering process is performed to the interpolated peak ADP set.
Step S102, judge whether a dense path exists in the interpolated and filtered peak ADP set, if yes, select a point to be interpolated from each of early, middle and late paths of each peak ADP in the interpolated and filtered peak ADP set, and perform an eliminating dense adjacent path interference process to the three selected points to be interpolated.
Step S103, based on an early-middle-late path principle, a peak position interpolation is performed to the three points to be interpolated after performing the eliminating dense adjacent path interference process, to adjust a peak position of each peak ADP, and the adjusted peak position is saved.

The method provided by the present invention adopts the method of interpolating value 0 and filtering, which improves the sampling precision and at the same time simplifies the computation greatly; and in the process of eliminating dense adjacent path, it adopts the way of performing the eliminating dense path process to the three early-middle-late points to be interpolated, which further simplifies the computation and guarantees the searching performance at the same time.

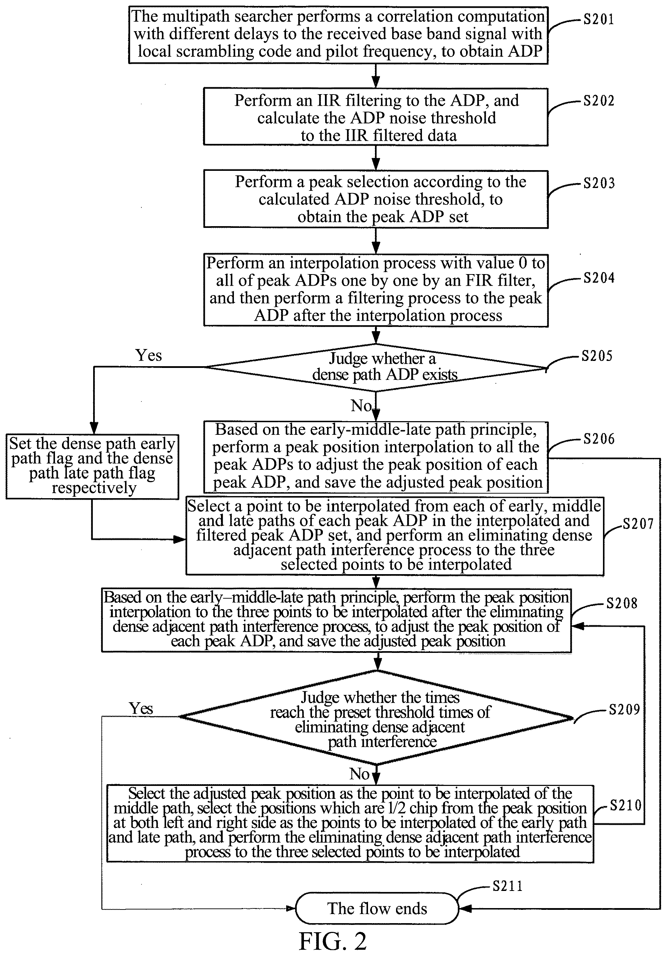

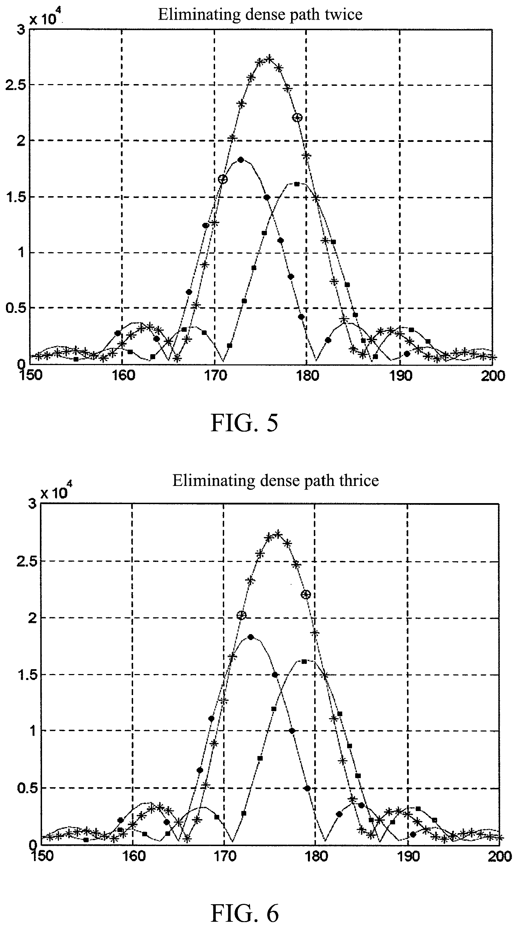

A preferred embodiment of the present invention is given according to FIGS. 2-6 below, and the technical detail of the present invention is further given in combination with the description of the embodiment, so as to illustrate the specific implementation process of the method provided by the present invention better.

In the process of the baseband process, a base station needs to support communication among multiple mobile phones, so the resource and costs is very strained, In order to support more users and achieve better performance, the present invention provides a process of eliminating dense path by digital filtering interpolation with low computation, thereby improving the performance of the searcher greatly and reducing the computation at the same time. The core idea of the present invention is: in the process of the multipath searching, obtaining the ADP with high sampling precision for the sampled peak ADP by the method of interpolating value 0 and filtering, wherein, a hash table can be used for looking up during the filtering process and the data with values 0 and the data with insufficient sub-sampling are not saved and do not participate in the multiplication and addition, thereby simplifying the computation greatly; for those peak ADPs around which the dense adjacent path exists, selecting respectively an point that needs to be interpolated from early, middle and late paths of the peak ADP to perform the eliminating dense adjacent path interference, and after the eliminating dense adjacent path interference, adjusting the peak position of the peak ADP by using the early-middle-late path principle. The present invention performs the eliminating dense adjacent path interference only to the three points that need to be interpolated, and compared with performing the eliminating dense path interference to all the data on the peak ADP in the prior art, the present invention guarantees the performance and at the same time simplifies the computation greatly.

Wherein, the early-middle-late path principle is based on the feature that scrambling code autocorrelation function is symmetric about multipath positions, that is to say, this scrambling code autocorrelation function is an even function relative to the multipath positions; in the ideal case, the central demodulation position (or demodulation phase) of the scrambling code autocorrelation function is aligned strictly with the actual multipath position, therefore, after the process by the scrambling code autocorrelation function, the value of the demodulation energy of this position is maximum, while the demodulation energy at the demodulation positions symmetrically distributed at two sides of the central demodulation position must be equal. The central demodulation position is called as the middle path position, while the demodulation positions that are earlier and later than the middle path position are respectively called as early path position and late path position. If the middle path position forward deviates from the central demodulation position of the autocorrelation function in the ideal case, the demodulation energy of the early path position will be greater than the demodulation energy of the late path position. It can be seen that the phase relation between the middle path position and the actual multipath position can be determined and hereby the scrambling code autocorrelation function is shifted by judging the relative magnitude of the early path position energy with the late path position energy, to make the central demodulation position is aligned with the actual multipath position as exactly as possible.

Specifically, the method for multipath searching provided by the present embodiment, as shown in FIG. 2, includes the following steps:
step S201, the multipath searcher performs a correlation operation with different time delay to the received base band signal with local scrambling code and pilot frequency, to obtain ADP.

Wherein, the obtained ADP can have different sampling precisions according to different performances of the searchers, and specifically the sampling precisions can be double, 4 times or octuple, and so on. The specific realizing process of the present invention will be described by taking double sampling precision for example in the embodiment.

Wherein, the number of the antenna data by double sampling is N, and N is equal to 2 times the searching window length. This searching window length is determined by the cell radius of the wireless communication system, and the larger searching radius determines a longer searching window. If the cell is hundreds of kilometers, then the searching window is very long correspondingly.

Step S202, an infinite impulse response (IIR) filtering is performed to the ADP, and the ADP noise threshold is calculated according to data after the IIR filtering.

Step S203, a peak selection is performed according to the calculated ADP noise threshold, to obtain a peak ADP set.

Step S204, an interpolation process with value 0 is performed to all of peak ADPs one by one by a finite impulse response (FIR) filter, and then a filtering process is performed to the peak ADP after the interpolation process, to obtain the filtered peak ADP set, which is recorded as ADPtimes. Wherein, the number of the FIR filter orders is h.

In this step, it is illustrated by taking the peak ADP set with octuple sampling precision which is obtained after the interpolation process with value 0. Obviously, the peak ADP set with a higher sampling precision can be obtained by interpolation process with value 0 according to the specific requirement, the specific process of which is similar to the process method of double sample precision to octuple sample precision, and will not be repeated herein.

Wherein, the specific procedure of the interpolation process with value 0 is that: the number of the double sampled antenna data is N, so, during the interpolation process with value 0, three values 0 need to be interpolated at the end of each data if the sampled data with octuple precision should be obtained, and due to taking the previous h/2 that does not meet the sub-sampling theorem and should be abnegated during the FIR filtering process into consideration, so, h/2 values 0 are added at the end of the data interpolated the values 0, and moreover the number of the interpolated data is extended from N to 4N+h/2, thus improving the sampling precision.

Further, the filtering process for the peak ADP after the interpolation process may be realized by one of the following two ways:
the first way, the FIR filter performs the filtering process to all of the data in the interpolated peak ADP set by looking up an order table. Wherein, the order table saves the data of all of the peak ADPs (including the interpolated values 0 and nonzero, valid data);
the second way, the FIR filter performs the filtering process to the nonzero, valid data in the interpolated peak ADP set by looking up an order table. Wherein, the order table saves the nonzero, valid data after the interpolation process (that is to say, saves only the nonzero, valid data, but not the data with values 0).

Compared with the first way, the second way has the advantage of reducing computation, the reason of which is: because during the filtering with multiplication and addition process the data with values 0 is still 0 after the computation by multiplying and adding, which has no effect on the overall result, the data with values 0 will not be filtered during the filtering process so as to achieve the effect of reducing the computation.

During the filtering process by the second way after the interpolation process, the initial h/2 data should be abnegated because of insufficient sub-sampling, this method starts the calculation directly from the (h/2+1)th data that meets the sampling precision, thereby reducing the computation; and the interpolated values 0 and the added h/2 values 0 at the end are not used in the filtering with multiplication and addition, therefore the FIR filter performs the filtering operation only to the nonzero data during the filtering process, thereby improving the computation efficiency greatly.

During the specific filtering process, considering the alignment condition of the data and the filter coefficient, this filtering process can further be divided into three sections of process branches, which are embodied as:
the first section of process branch: during the filtering process, the first section of process branch is from the data to be filtered aligning with h/2 filter coefficients to the filtered data aligning with h filtering coefficients. Wherein, the reason for calculating from h/2 is in that the initial h/2 data are abnegated because of insufficient sub-sampling.

For example, if h=32, so there are 16 data are aligned, however, due to values 0 are interpolated, the number of the aligned nonzero digits is 4. With the procedure of filtering, when there are 32 data are aligned, there are 8 nonzero data, so a judgment for data alignment is added. In this section of process branch, the number of nonzero data is 4-7, one nonzero data is added every 4 times filtering.

The nonzero filtering data and the filtering coefficient corresponding to the nonzero filtering data will be found out by using the method of looking up the hash table, to realize the multiplication and addition operation. In this section of program, from the initial data aligning with h/2 to the data to be filtered aligning with h parameters, because value 0 is interpolated directly and distantly into every two valid data, element 0 is not saved directly in the hash table during the computation, and the subscript N^{∗}4 of the data is directly aligned with the filter coefficient to perform a digital filtering process, thus saving the data memory space.

The second section of process branch: during the filtering process, when the filtering data are fully aligned with the h filtering coefficients, it is the second section of process branch; because the data are aligned fully, the number of the fully aligned nonzero data in the 32-order filter is only 8. Because three values 0 are interpolated between every two data, for the h data, only h/4 nonzero data needs to be looked up to finish the filtering computation. Therefore, except for the time for looking up the hash table, the time, substantially related to the filtering addition and multiplication computation, reduces to a quarter of the original time.

The third section of process branch: during the filtering process, since the initial h/2 data is abnegated due to insufficient sub-sampling, the h/2 zeros are added at the end of the data to guarantee the alignment of the data, and because the added data as value 0 does not function in the filtering multiplication and addition, it does not participate in the multiplication and addition computation and is not saved. Now, the number of the nonzero data of the aligned coefficients is changed from 8 to 4.

The realizing processes of the above-mentioned three sections of process branches in the specific filtering process are illustrated by taking the number h of filtering orders is equal to 32 for example:

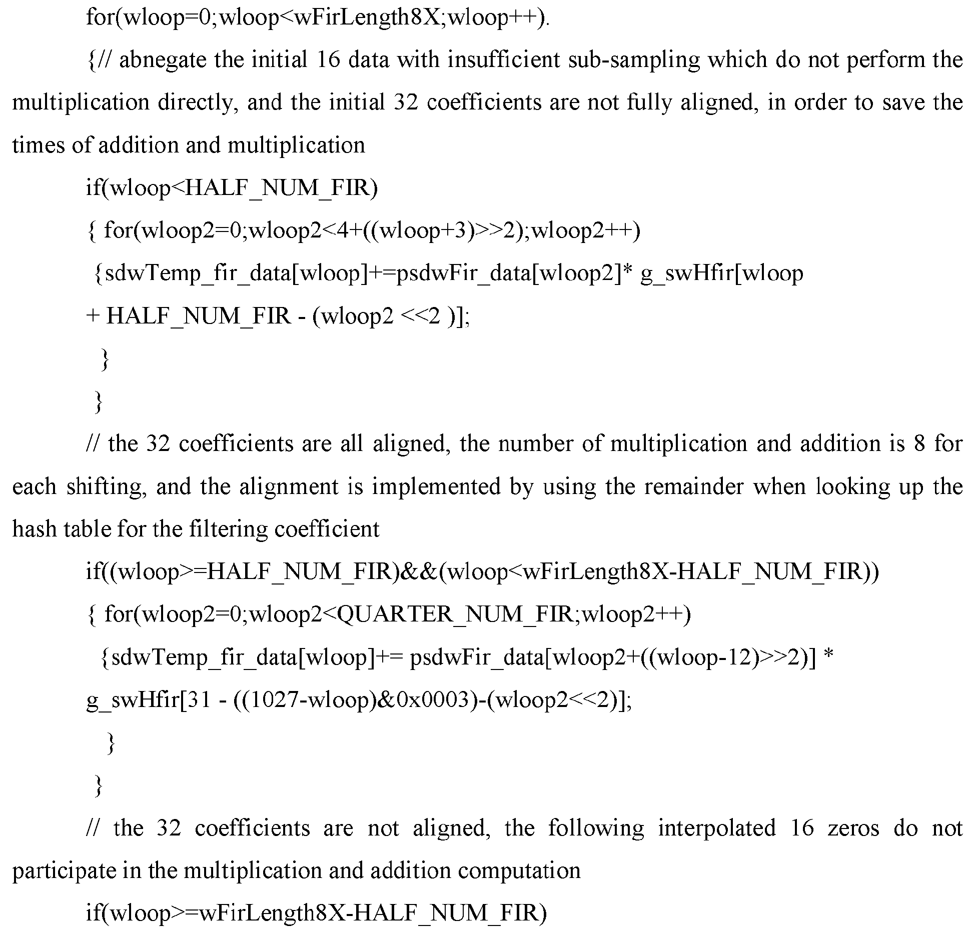

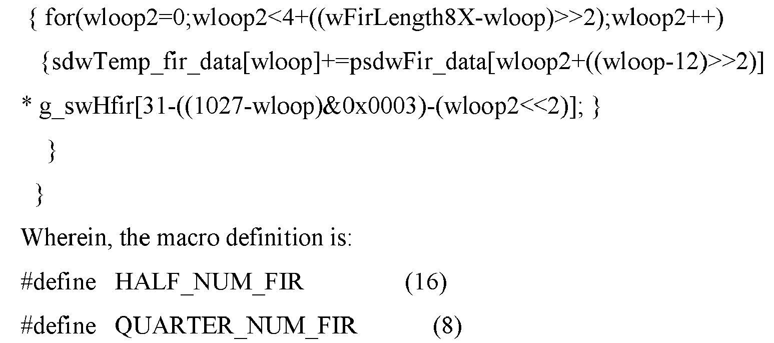

The present invention adopts the hash searching, and the nonzero data found every time needs the filtering multiplication and addition operation. Thus, the (4N+h/2) data which perform the multiplication and addition for h times changes to N data which perform the multiplication and addition for h times and N data which perform the hash searching, of which the computation reduces by half.

The above-mentioned method for multipath searching continues as follows:
step S205, judge whether the dense path ADP exists in the interpolated and filtered peak ADP set, if yes, the early path flag of the dense path and the late path flag of the dense path is set respectively, and then execute step S207; and if no, execute step S206.
Step S206, based on the early-middle-late path principle, all the peak ADPS is performed peak position interpolation to adjust the peak position of each peak ADP, and the adjusted peak positions will be saved, and then turn to step S211.

Wherein, based on the early-middle-late path principle, the process of peak position interpolation mainly includes the following steps:
(1) calculate an early-middle-late path adjusting factor R, R= (early path ADP - late path ADP) / middle path ADP;
   wherein, the early path ADP refers to the ADP of the peak position minus 1/2 chip position, the late path ADP refers to the ADP of the peak position plus 1/2 chip position, and the middle ADP is the present peak ADP.
   Wherein, the 1/2 chip is only a preferred embodiment of the present invention, and the present invention is not limited to the 1/2 chip.
(2) compare the R with several preset thresholds. These thresholds (threshold1, threshold2, ...thresholdP) correspond to several peak position adjusting steps (step1, step2...). If |*R*| is greater than the preset threshold 1 but less than the threshold2, the peak position needs to move step1; similarly, if |*R*| is greater than the preset threshold2 but less than the threshold3, the peak position needs to move step2; and the way of moving is performed according to symbol of R, if R>0, the peak moves to the early path direction, and if R<0, the peak moves to the late path direction.

Step S207, a point to be interpolated is selected from each of early, middle, late paths of each peak ADP in the interpolated and filtered peak ADP set, and the eliminating dense adjacent path interference process is performed to the three selected points to be interpolated.

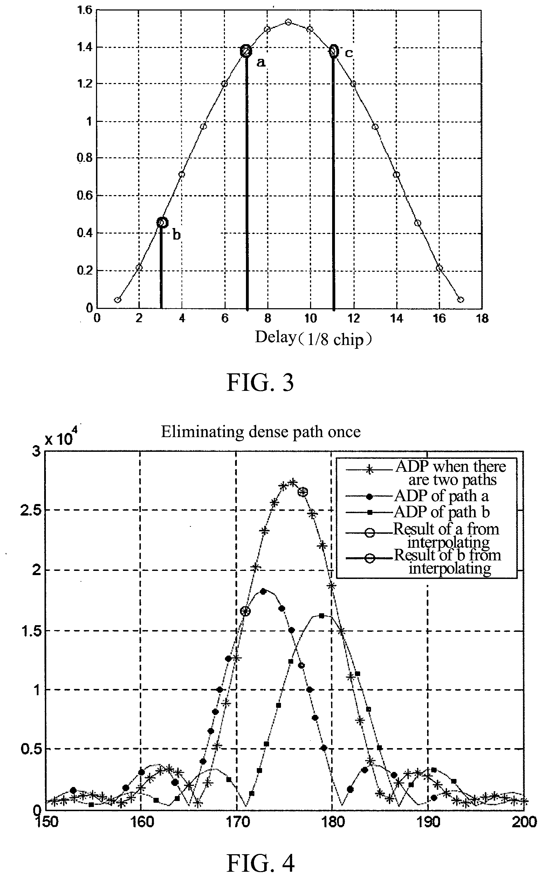

Wherein, the step of selecting a point to be interpolated from each of early, middle, late paths of each peak ADP is preferably implemented by the following way: selecting the peak position of each peak ADP as the point to be interpolated of the middle path b, the position resulted from the peak position minus 1/2 chip is the point to be interpolated of the early path a, and the position resulted from the peak position plus 1/2 chip is the point to be interpolated of the late path c, as shown in FIG. 3.

Of course, the above way of selecting values from the positions which are 1/2 chip from the peak position at both left and right sides is only a preferred embodiment, and the present invention does not preclude the way of selecting values from other points of symmetrical positions on both sides (left and right) of the peak position; for example, the values can be selected from the positions which are 1/8 chip or 1 chip from the peak position at both left and right sides, and so on.

In this step, the procedure for performing the eliminating dense adjacent path process to the selected three points to be interpolated specifically includes:
(1) the peak ADP at which the three points to be interpolated a, b, c are located is taken as the peak ADP to be adjusted, and the curve fitting is performed to the early-late adjacent peak ADP except for the peak ADP to be adjusted at the three points to be interpolated a, b, c, to obtain the curve fitting data of the early-late adjacent peak ADP;
(2) the data corresponding to the three points to be interpolated a, b, c in the envelope formed from the interpolated and filtered peak ADP set ADPtimes subtract the curve fitting data corresponding to the early-late adjacent peak ADP respectively, to obtain the three points to be interpolated without dense adjacent path interference.

The procedure for eliminating dense adjacent path interference mentioned above is described by a specific example in the following:
it is assumed that the dense paths existing in the interpolated and filtered peak ADP set ADPtimes are ADP1, ADP2, ...ADPK, wherein the ADPs are arranged according to the order of the delay positions from small to large;
three points to be interpolated a1, b1 and c1 are selected from the peak ADP1, and the curve fitting is performed to the peak ADP2 to peak ADPK at a1, b1 and c1, to obtain the curve fitting data;
the data corresponding to the a1, b1 and c1 in the envelope formed from the interpolated and filtered peak ADP set ADPtimes subtract the curve fitting data of the peak ADP2 to peak ADPK, to obtain the three points a1, b1, c1 without other dense adjacent path interference. Similarly, the eliminating dense adjacent path interference process is performed to the peak ADP2 to the peak ADPK by using the above method.

Step S208, based on the early-middle-late path principle, the peak position interpolation is performed to the three points to be interpolated after the eliminating dense adjacent path interference process, to adjust the peak position of each peak ADP, and the adjusted peak position is saved. Wherein, the procedure of peak position interpolation is the same with the procedure in step S206.

Step S209, judge whether the times reach the threshold times of the preset eliminating dense adjacent path interference, if yes, execute step S211, and if no, execute step S210.

Wherein, the threshold times is 3 preferably, and of course, the threshold times can be determined depending on the specific condition. As shown in FIGS. 4-6, they are the effect diagrams after eliminating dense adjacent path three times by the method provided by the present invention.

Step S210, the adjusted peak position of each peak ADP is selected as the point to be interpolated of the middle path, the position resulted from that peak position minus 1/2 chip is the point to be interpolated of the early path, and the position resulted from that peak position plus 1/2 chip is the point to be interpolated of the late path; perform the eliminating dense adjacent path interference process to the three selected points to be interpolated, and return to step S208.

Step S211, the flow ends.

The method provided by the present invention discloses a procedure of for eliminating dense path by digital filtering interpolation with low computation; this procedure adopts the method of interpolating value 0 to filter, and adopts a hash table for looking up during the filtering process, and the data with values 0 and with insufficient sub-sampling do not participate in the multiplication and addition, thereby simplifying the calculation greatly; and during the eliminating dense adjacent path, it adopts the way of performing the purposive fitting and subtracting envelope to the three points that need to be interpolated of the early, middle and late paths. Compared with the dense path process and interpolation adjusting phase of the entire envelop of the early-late path in the prior art, the present invention reduces the computation greatly.

The result comparison of implementing the present invention and implementing the traditional searching method under the same searching condition is given as follows. As shown in TABLE 1, it is, under the environment of ARM926 software simulation, the computation required by the method of the present application and the traditional method and optimization ratio when the length of the searching window is 48chip; as shown in TABLE 2, it is the computation required for the method of the present application and the traditional method and optimization ratio when the length of the searching window is 64chip.

**TABLE 1:**

| | Non-hash table and M points fitting | Designing according to the method of the present invention |
|---|---|---|
| The number of filtering clock cycle | 0x242de | 0xec1a |
| Clock cycle when eliminating dense path once | 0x76fe | 0x1b3c |
| Clock cycle when eliminating dense path twice | 0xedfc | 0x3af1 |
| Clock cycle when eliminating dense path thrice | 0x164fc | 0x563d |

**TABLE 2:**

| | Non-hash table and M points fitting | Designing according to the method of the present invention |
|---|---|---|
| The number of filtering clock cycle | 0x303d3 | 0x13ace |
| Clock cycle when eliminating dense path once | 0x94be | 0x1d8f |
| Clock cycle when eliminating dense path twice | 0x1297c | 0x3b1e |
| Clock cycle when eliminating dense path thrice | 0x1be3b | 0x58ad |

It can be seen from the above tables that the present invention realizes simplifying the computation greatly while guaranteeing the performance, and decreasing the filtering clock cycle and the clock cycle of eliminating dense path.

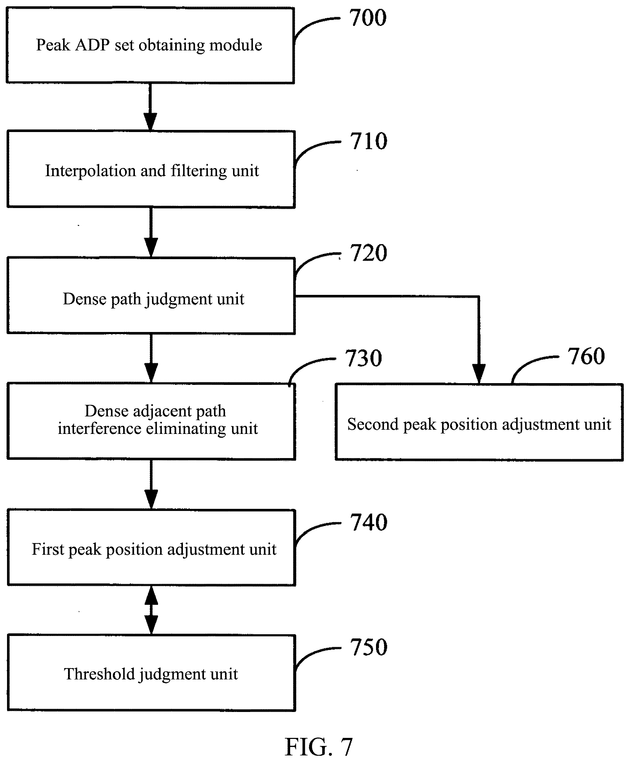

The present invention also provides an apparatus for multipath searching, and as shown in FIG. 7, the apparatus includes:
an interpolation and filtering unit 710, which is configured to: in a process of the multipath searching, perform an interpolation process with value 0 to a sampled peak amplitude delay profile (ADP) set, and perform a filtering process to the interpolated peak ADP set;
a dense path judgment unit 720, which is configured to: judge whether a dense path exists in the interpolated and filtered peak ADP set;
a dense adjacent path interference eliminating unit 730, which is configured to: when the dense path judgment unit 720 determines that the dense path exists in the interpolated and filtered peak ADP set, select a point to be interpolated from each of early, middle and late paths of each peak ADP in the interpolated and filtered peak ADP set, and perform an eliminating dense adjacent path interference process to the three selected points to be interpolated;
a first peak position adjustment unit 740, which is configured to: based on an early-middle-late path principle, perform a peak position interpolation to the three points to be interpolated after performing the eliminating dense adjacent path interference process to adjust a peak position of each peak ADP, and save the adjusted peak position.

The apparatus provided by the present invention also includes:
a threshold judgment unit 750, which is configured to: judge whether times reach preset eliminating dense adjacent path interference threshold times, if yes, end the flow; and if no, select the adjusted peak position of each peak ADP as the point to be interpolated of the middle path, select a position of the peak position - 1/2 chip as the point to be interpolated of the early path, select a position of the peak position + 1/2 chip as the point to be interpolated of the late path, perform the eliminating dense adjacent path interference process to the three selected points to be interpolated, and trigger the first peak position adjustment unit 740.

A second peak position adjustment unit 760, which is configured to: when the dense path judgment unit determines that no dense path exists in the interpolated and filtered peak ADP set, perform the peak position interpolation to all the peak ADPs in the peak ADP set directly based on the early-middle-late path principle, to adjust the peak position of each peak ADP, and save the adjusted peak position.

The above apparatus also includes:
a peak ADP set obtaining module 700, which is configured to: perform a correlation computation with different delays to a received base band signal with a local scrambling code and a pilot frequency to obtain ADP; perform an IIR filtering to the ADP, and calculate an ADP noise threshold according to the IIR filtered data; and perform a peak selection according to the calculated ADP noise threshold to obtain the peak ADP set.

Wherein, the interpolation and filtering unit is configured to perform the filtering process to the interpolated peak ADP set by the following way:
performing the filtering process to nonzero valid data in the interpolated peak ADP set by looking up a hash table, wherein the hash table saves the nonzero valid data after the interpolation process; or
performing the filtering process to all the data in the interpolated peak ADP set by looking up an order table.

The dense adjacent path interference eliminating element is configured to select the point to be interpolated from each of early, middle and late paths of each peak ADP by the following way:
selecting the peak position of each peak ADP as the point to be interpolated of the middle path, selecting a position of the peak position minus a symmetrical position on both sides of the peak position as the point to be interpolated of the early path, and selecting a position of the peak position plus a symmetrical position on both sides of the peak position as the point to be interpolated of the late path.

The dense adjacent path interference eliminating unit is configured to perform the eliminating dense adjacent path interference process to the three selected points to be interpolated by the following way:
taking the peak ADP at which the three points to be interpolated are located as the peak ADP to be adjusted, and performing a curve fitting to an early-late adjacent peak ADP except for the peak ADP to be adjusted at the three points to be interpolated, to obtain curve fitting data of the early-late adjacent peak ADP; and
the data corresponding to the three points to be interpolated in an envelope formed from the interpolated and filtered peak ADP set subtracting respectively the curve fitting data of the early-late adjacent peak ADP, to obtain the three points to be interpolated without dense adjacent path interference.

Wherein, the symmetrical position on both sides of the peak position is 1/2 chip preferably, however, the present invention is not limited to that.

Those skilled in the art can understand that all or part of steps of the above method can be fulfilled by programs instructing the relative hardware components, and the programs can be stored in a computer readable storage medium such as a read only memory, a magnetic disk or an optical disk, etc. Alternatively, all or part of the steps of the above embodiments can also be realized by one or more integrated circuits. Accordingly, each module/unit in the above embodiments can be realized in the form of hardware, or in the form of software function module. The present invention is not limited to the combination of the hardware and software in any specific form.

Obviously, those skilled in the art can make various modifications and variations to the present invention without departing the scope of the present invention. Thus, these modifications and variations of the present invention fall into the scope of the claims of the present invention, and the present invention is intended to include these modifications and variations in.

The present invention discloses a process of eliminating dense path by digital filtering interpolation with low computation; this process adopts a method of interpolating value 0 for filtering, and can perform the filtering process only to the nonzero valid data and the data meeting the sampling condition by looking up the hash table during the filter process, and the data with values 0 do not participate in the multiplication and addition and saving, thereby simplifying the computation greatly; in the process of eliminating dense adjacent path, the way of performing the purposive fitting and subtracting envelope to the three early-middle-late points that need to be interpolated is adopted, which guarantees the performance while greatly simplifying the computation.

## Claims

1. A method for multipath searching, comprising:
performing a correlation computation (S201) with different time delays to a received baseband signal with a local scrambling code and a pilot frequency to obtain an amplitude delay profile ADP;
performing a peak selection according to an ADP noise threshold to obtain a peak ADP set (S203); in a process of the multipath searching, performing an interpolation process with value 0 to the sampled peak amplitude delay profile, ADP, set, and performing a filtering process to the interpolated peak ADP set (S101);
judging whether a dense path exists in the interpolated and filtered peak ADP set, if the dense path exists in the interpolated and filtered peak ADP set, selecting a point to be interpolated from each of early, middle and late paths of each peak ADP in the interpolated and filtered peak ADP set, and performing an eliminating dense adjacent path interference process to the three selected points to be interpolated (S102); and
based on an early-middle-late path principle, performing a peak position interpolation to the three points to be interpolated after performing the eliminating dense adjacent path interference process, to adjust a peak position of each peak ADP, and saving the adjusted peak position (S103);
wherein middle path position is the central demodulation position of the scrambling code autocorrelation function and early and late path positions are the demodulation positions that are earlier and later than the middle path position, respectively;
wherein said performing a peak position interpolation based on an early-middle-late path principle comprises the steps of determining the phase relation between the middle path position and the actual multipath position by judging the relative magnitude of the early path position energy with the late path position energy.

2. The method according to claim 1, wherein, before the step of performing the interpolation process with value 0 to the sampled ADP set, the method further comprises:
performing an infinite impulse response, IIR, filtering to the ADP, and calculating said ADP noise threshold according to the IIR filtered data (S202).

3. The method according to claim 1, wherein, the step of performing the filtering process to the interpolated peak ADP set comprises:
performing the filtering process to nonzero valid data in the interpolated peak ADP set by looking up a hash table, wherein the hash table saves the nonzero valid data after the interpolation process; or,
performing the filtering process to all the data in the interpolated peak ADP set by looking up an order table.

4. The method according to claim 1, wherein, the step of selecting the point to be interpolated from each of early, middle and late paths of each peak ADP comprises:
selecting the peak position of each peak ADP as the point to be interpolated of the middle path, selecting a position of the peak position minus a symmetrical position on both sides of the peak position as the point to be interpolated of the early path, and selecting a position of the peak position plus a symmetrical position on both sides of the peak position as the point to be interpolated of the late path.

5. The method according to claim 4, wherein, the step of performing the eliminating dense adjacent path interference process to the three selected points to be interpolated comprises:
taking the peak ADP at which the three points to be interpolated are located as the peak ADP to be adjusted, and performing a curve fitting to an early-late adjacent peak ADP except for the peak ADP to be adjusted at the three points to be interpolated, to obtain curve fitting data of the early-late adjacent peak ADP; and
the data corresponding to the three points to be interpolated in an envelope formed from the interpolated and filtered peak ADP set subtracting respectively the curve fitting data of the early-late adjacent peak ADP, to obtain the three points to be interpolated without dense adjacent path interference.

6. The method according to claim 1, wherein, after the step of saving the adjusted peak position, the method further comprises:
judging whether times of the eliminating dense adjacent path interference process reach threshold times of a preset eliminating dense adjacent path interference, if the times reach the threshold times, ending the flow; and if the times do not reach the threshold times, selecting the adjusted peak position of each peak ADP as the point to be interpolated of the middle path, selecting a position of the peak position minus the symmetrical position on both sides of the peak position as the point to be interpolated of the early path, selecting a position of the peak position plus the symmetrical position on both sides of the peak position as the point to be interpolated of the late path, performing the eliminating dense adjacent path interference process to the three selected points to be interpolated, and returning to the step of performing the peak position interpolation to the three points to be interpolated.

7. The method according to claim 1, wherein, after the step of performing the filtering process to the interpolated peak ADP set, the method further comprises:
when no dense path exists in the interpolated and filtered peak ADP set, performing the peak position interpolation to all of the peak ADPs in the peak ADP set directly based on the early-middle-late path principle, to adjust the peak position of each peak ADP, and saving the adjusted peak position.

8. The method according to claim 4 or 6, wherein:
the symmetrical position on both sides of the peak position is 1/2 chip.

9. An apparatus for multipath searching, comprising:
a peak ADP set obtaining module (700), which is configured to: perform a correlation computation with different time delays to a received baseband signal with a local scrambling code and a pilot frequency to obtain an amplitude delay profile ADP; and perform a peak selection according to an ADP noise threshold to obtain a peak ADP set;
an interpolation and filtering unit (710), which is configured to: in a process of the multipath searching, perform an interpolation process with value 0 to the sampled peak amplitude delay profile, ADP, set, and perform a filtering process to the interpolated peak ADP set;
a dense path judgment unit (720), which is configured to: judge whether a dense path exists in the interpolated and filtered peak ADP set, if the dense path exists in the interpolated and filtered peak ADP set, trigger a dense adjacent path interference eliminating unit (730);
the dense adjacent path interference eliminating unit (730), which is configured to: when the dense path judgment unit (720) determines that the dense path exists in the interpolated and filtered peak ADP set, select a point to be interpolated from each of early, middle and late paths of each peak ADP in the interpolated and filtered peak ADP set, and perform an eliminating dense adjacent path interference process to the three selected points to be interpolated; and
a first peak position adjustment unit (740), which is configured to: based on an early-middle-late path principle, perform a peak position interpolation to the three points to be interpolated after performing the eliminating dense adjacent path interference process, to adjust a peak position of each peak ADP, and save the adjusted peak position;
wherein middle path position is the central demodulation position of the scrambling code autocorrelation function and early and late path positions are the demodulation positions that are earlier and later than the middle path position, respectively;
wherein said performing a peak position interpolation based on an early-middle-late path principle comprises the steps of determining the phase relation between the middle path position and the actual multipath position by judging the relative magnitude of the early path position energy with the late path position energy.

10. The apparatus according to claim 9, wherein, the apparatus further comprises a threshold judgment unit (750);
the first peak position adjustment unit (740) is further configured to: trigger the threshold judgment unit (750) after saving the adjusted peak position; and
the threshold judgment unit (750) is configured to: judge whether times of the eliminating dense adjacent path interference process reach preset eliminating dense adjacent path interference threshold times, if the times reach the threshold times, end the flow; and if the times do not reach the threshold times, select the adjusted peak position of each peak ADP as the point to be interpolated of the middle path, select a position of the peak position minus the symmetrical position on both sides of the peak position as the point to be interpolated of the early path, select a position of the peak position plus the symmetrical position on both sides of the peak position as the point to be interpolated of the late path, perform the eliminating dense adjacent path interference process to the three selected points to be interpolated, and trigger the first peak position adjustment unit (740).

11. The apparatus according to claim 9, wherein, the apparatus further comprises a second peak position adjustment unit (760);
the dense path judgment unit (720) is further configured to: if it is determined that no dense path exists in the interpolated and filtered peak ADP set, trigger the second peak position adjustment unit (760); and
the second peak position adjustment unit (760) is configured to: when the dense path judgment unit (720) determines that no dense path exists in the interpolated and filtered peak ADP set, perform the peak position interpolation to all the peak ADPs in the peak ADP set directly based on the early-middle-late path principle, to adjust the peak position of each peak ADP, and save the adjusted peak position.

12. The apparatus according to claim 9, wherein said peak ADP set obtaining module (700), is further configured to perform an infinite impulse response, IIR, filtering to the ADP, and calculate said ADP noise threshold according to the IIR filtered data.

13. The apparatus according to claim 9, wherein, the interpolation and filtering unit (710) is configured to perform the filtering process to the interpolated peak ADP set by the following way:
performing the filtering process to nonzero valid data in the interpolated peak ADP set by looking up a hash table, wherein the hash table saves the nonzero valid data after the interpolation process; or
performing the filtering process to all the data in the interpolated peak ADP set by looking up an order table.

14. The apparatus according to claim 9, wherein, the dense adjacent path interference eliminating unit (730) is configured to select the point to be interpolated from each of early, middle and late paths of each peak ADP by the following way:
selecting the peak position of each peak ADP as the point to be interpolated of the middle path, selecting a position of the peak position minus a symmetrical position on both sides of the peak position as the point to be interpolated of the early path, and selecting a position of the peak position plus a symmetrical position on both sides of the peak position as the point to be interpolated of the late path.

15. The apparatus according to claim 14, wherein, the dense adjacent path interference eliminating unit (730) is configured to perform the eliminating dense adjacent path interference process to the three selected points to be interpolated by the following way:
taking the peak ADP at which the three points to be interpolated are located as the peak ADP to be adjusted, and performing a curve fitting to an early-late adjacent peak ADP except for the peak ADP to be adjusted at the three points to be interpolated, to obtain curve fitting data of the early-late adjacent peak ADP; and
the data corresponding to the three points to be interpolated in an envelope formed from the interpolated and filtered peak ADP set subtracting respectively the curve fitting data of the early-late adjacent peak ADP, to obtain the three points to be interpolated without dense adjacent path interference.

## Patentansprüche

1. Verfahren zur Mehrwegesuche, umfassend:
Ausführen einer Korrelationsberechnung (S201) mit unterschiedlichen Zeitverzögerungen über ein empfangenes Basisbandsignal mit einem lokalen Verschlüsselungscode und einer Pilotfrequenz, um ein Amplitudenverzögerungsprofil (amplitude delay profile, ADP) zu erlangen;
Ausführen einer Peak-Auswahl gemäß einem ADP-Rauschschwellenwert, um einen Peak-ADP-Satz (S203) zu erlangen;
in einem Vorgang der Mehrwegesuche, Ausführen eines Interpolationsvorgangs mit einem Wert 0 über den abgetasteten Peak-Amplitudenverzögerungsprofil-Satz, ADP-Satz, und Ausführen eines Filtervorgangs über den interpolierten Peak-ADP-Satz (S101);
Beurteilen, ob ein dichter Weg in dem interpolierten und gefilterten Peak-ADP-Satz vorhanden ist, wenn der dichte Weg in dem interpolierten und gefilterten Peak-ADP-Satz vorhanden ist, Auswählen eines zu interpolierenden Punkts aus jedem des frühen, mittleren und späten Wegs von jedem Peak-ADP in dem interpolierten und gefilterten Peak-ADP-Satz und Ausführen eines eliminierenden Vorgangs zur Beseitigung dichter benachbarter Wege über die drei ausgewählten zu interpolierenden Punkte (S102); und
basierend auf einem Früh-Mittel-Spät-Wegprinzip Ausführen einer Peak-Positionsinterpolation über die drei zu interpolierenden Punkte nach Ausführen der Eliminierung des Interferenzvorgangs des dichten benachbarten Wegs, um eine Peak-Position jedes von jedem Peak-ADP einzustellen, und Speichern der angepassten Peak-Position (S103)
wobei eine mittlere Wegposition die zentrale Demodulationsposition der Verschlüsselungscode-Autokorrelationsfunktion ist und die frühe und späte Wegposition die Demodulationspositionen sind, die früher bzw. später als die mittlere Wegposition sind;
wobei ein Ausführen einer Peak-Positionsinterpolation basierend auf einem Früh-Mittel-Spät-Wegprinzip die Schritte eines Bestimmens der Phasenbeziehung zwischen der mittleren Wegposition und der tatsächlichen Mehrwegeposition durch Beurteilen der relativen Größe der Energie der frühen Wegposition mit der Energie der späten Wegposition umfasst.

2. Verfahren nach Anspruch 1, wobei das Verfahren vor dem Schritt eines Ausführens des Interpolationsvorgangs mit Wert 0 über den abgetasteten ADP-Satz ferner Folgendes umfasst:
Ausführen einer unendlichen Impulsantwort (infinite impulse response, IIR), Filtern auf das ADP und Berechnen des ADP-Rauschschwellenwerts gemäß den auf IIR gefilterten Daten (S202).

3. Verfahren nach Anspruch 1, wobei der Schritt eines Ausführens des Filtervorgangs über den interpolierten Peak-ADP-Satz Folgendes umfasst:
Ausführen des Filtervorgangs über ungleich Null gültige Daten in dem interpolierten Peak-ADP, die durch Durchsuchen einer Streuwerttabelle festgelegt wurde, wobei die Streuwerttabelle die ungleich Null gültigen Daten nach dem Interpolationsvorgang speichert; oder
Ausführen des Filtervorgangs über alle Daten in dem interpolierten Peak-ADP, das durch Durchsuchen einer Auftragstabelle festgelegt wurde.

4. Verfahren nach Anspruch 1, wobei der Schritt eines Auswählens des zu interpolierenden Punktes aus jedem von dem frühen, mittleren und späten Weg von jedem Peak-ADP Folgendes umfasst:
Auswählen der Peak-Position von jedem Peak-ADP als der zu interpolierende Punkt des mittleren Wegs, Auswählen einer Position der Peak-Position minus einer symmetrischen Position auf beiden Seiten der Peak-Position als der zu interpolierende Punkt des frühen Wegs, und Auswählen einer Position der Peak-Position plus einer symmetrischen Position auf beiden Seiten der Peak-Position als der zu interpolierende Punkt des späten Wegs.

5. Verfahren nach Anspruch 4, wobei der Schritt eines Ausführens des Eliminierens des Interferenzvorgangs des dichten benachbarten Wegs über die drei ausgewählten zu interpolierenden Punkte Folgendes umfasst:
Übernehmen des Peak-ADP, an dem sich die drei zu interpolierenden Punkte befinden, als das einzustellende Peak-ADP, und Ausführen einer Kurvenanpassung an ein frühes-spätes benachbartes Peak-ADP, mit Ausnahme des Peak-ADP, das an den drei zu interpolierenden Punkten anzupassen ist, um Kurvenanpassungsdaten des frühen-späten benachbarten Peak-ADP zu erlangen; und
die Daten entsprechend der drei zu interpolierenden Punkte in einer Amplitude, die aus dem interpolierten und gefilterten Peak-ADP-Satz unter Abzug der Kurvenanpassungsdaten des frühen-späten benachbarten Peak-ADP gebildet ist, um die drei zu interpolierenden Punkte ohne Interferenz des dichten benachbarten Wegs zu erlangen.

6. Verfahren nach Anspruch 1, wobei das Verfahren nach dem Schritt eines Speicherns der angepassten Peak-Position ferner Folgendes umfasst:
beurteilen, ob Zeiten des Eliminierens des Interferenzvorgangs des dichten benachbarten Wegs Schwellenwertzeiten einer vorangepassten Eliminierung einer dichten benachbarten Weginterferenz erreichen, wenn die Zeiten die Schwellenwertzeiten erreichen, Beenden des Stroms; und wenn die Zeiten die Schwellenzeiten nicht erreichen, Auswählen der angepassten Peak-Position von jedem Peak-ADP als der zu interpolierende Punkt des mittleren Wegs, Auswählen einer Position der Peak-Position minus einer symmetrischen Position auf beiden Seiten der Peak-Position als der zu interpolierende Punkt des frühen Wegs, und Auswählen einer Position der Peak-Position plus der symmetrischen Position auf beiden Seiten der Peak-Position als der zu interpolierende Punkt des späten Wegs, Ausführen des Eliminierens des Interferenzvorgangs des dichten benachbarten Wegs über die drei ausgewählten, zu interpolierenden Punkte, und Rückkehr zu dem Schritt eines Ausführens der Peak-Positionsinterpolation über die drei zu interpolierenden Punkte.

7. Verfahren nach Anspruch 1, wobei das Verfahren nach dem Schritt eines Ausführens des Filtervorgangs über den interpolierten Peak-ADP-Satz ferner Folgendes umfasst:
wenn kein dichter Weg in dem interpolierten und gefilterten Peak-ADP-Satz vorhanden ist, Ausführen der Peak-Positionsinterpolation über alle Peak-ADPs in dem Peak-ADP-Satz direkt basierend auf dem Früh-Mittel-Spät-Prinzip, um die Peak-Position von jedem Peak-ADP anzupassen, und Speichern der angepassten Peak-Position.

8. Verfahren nach Anspruch 4 oder 6, wobei:
die symmetrische Position auf beiden Seiten der Peak-Position 1/2 Chip ist.

9. Vorrichtung zur Mehrwegesuche, umfassend:
ein Peak-ADP-Satz-Erlangungsmodul (700), das zu Folgendem konfiguriert ist: Ausführen einer Korrelationsberechnung mit unterschiedlichen Zeitverzögerungen über ein empfangenes Basisbandsignal mit einem lokalen Verschlüsselungscode und einer Pilotfrequenz, um ein Amplitudenverzögerungsprofil (amplitude delay profile, ADP) zu erlangen; und Ausführen einer Peak-Auswahl gemäß einem ADP-Rauschschwellenwert, um einen Peak-ADP-Satz zu erlangen;
eine Interpolations- und Filtereinheit (710), die zu Folgendem konfiguriert ist: Ausführen eines Interpolationsvorgangs mit Wert 0 über das abgetastete Peak-Amplitudenverzögerungsprofil-Satz ADP-Satz, in einem Vorgang der Mehrwegesuche, und Ausführen eines Filtervorgangs über den interpolierten Peak-ADP-Satz;
eine Dichtweg-Beurteilungseinheit (720), die zu Folgendem konfiguriert ist: Beurteilen, ob ein dichter Weg in dem interpolierten und gefilterten Peak-ADP-Satz vorhanden ist, wenn der dichte Weg in dem interpolierten und gefilterten Peak-ADP-Satz vorhanden ist, Auslösen einer benachbarten Dichtweg-Interferenz-Eliminierungseinheit (730);
die benachbarte Dichtweg-Interferenz-Eliminierungseinheit(730), die zu Folgendem konfiguriert ist: wenn die Dichtweg-Beurteilungseinheit (720) bestimmt, dass der dichte Weg in dem interpolierten und gefilterten Peak-ADP-Satz vorhanden ist, Auswählen eines Punkts, der aus jedem des frühen, mittleren und späten Wegs von jedem Peak-ADP in dem interpolierten und gefilterten Peak-ADP-Satz interpoliert werden soll, und Ausführen eines Eliminierungsvorgangs für dichte benachbarte Wege zu den drei ausgewählten zu interpolierenden Punkten; und
eine erste Peak-Positionsanpassungseinheit (740), die zu Folgendem konfiguriert ist: basierend auf einem Früh-Mittel-Spät-Wegeprinzip, Ausführen einer Peak-Positionsinterpolation über die drei zu interpolierenden Punkte, nachdem der Eliminierungsvorgang für dichte benachbarte Wege ausgeführt wurde, um eine Peak-Position von jedem Peak-ADP anzupassen, und Speichern der angepassten Peak-Position;
wobei eine mittlere Wegposition die zentrale Demodulationsposition der Verschlüsselungscode-Autokorrelationsfunktion ist und die frühe und späte Wegposition die Demodulationspositionen sind, die früher bzw. später als die mittlere Wegposition sind;
wobei ein Ausführen einer Peak-Positionsinterpolation basierend auf einem Früh-Mittel-Spät-Wegprinzip die Schritte eines Bestimmens der Phasenbeziehung zwischen der mittleren Wegposition und der tatsächlichen Mehrwegeposition durch Beurteilen der relativen Größe der Energie der frühen Wegposition mit der Energie der späten Wegposition umfasst.

10. Vorrichtung nach Anspruch 9, wobei die Vorrichtung ferner eine Schwellenwertbeurteilungseinheit (750) umfasst;
die erste Peak-Positionsanpassungseinheit (740) ferner zu Folgendem konfiguriert ist: Auslösen der Schwellenwertbeurteilungseinheit (750) nach Speichern der angepassten Peak-Position; und
die Schwellenwertbeurteilungseinheit (750) zu Folgendem konfiguriert ist: Beurteilen, ob Zeiten des Eliminierens des Interferenzvorgangs des dichten benachbarten Wegs Schwellenwertzeiten einer vorangepassten Eliminierung einer dichten benachbarten Weginterferenz erreichen, wenn die Zeiten die Schwellenwertzeiten erreichen, Beenden des Stroms; und wenn die Zeiten die Schwellenzeiten nicht erreichen, Auswählen der angepassten Peak-Position von jedem Peak-ADP als der zu interpolierende Punkt des mittleren Wegs, Auswählen einer Position der Peak-Position minus einer symmetrischen Position auf beiden Seiten der Peak-Position als der zu interpolierende Punkt des frühen Wegs, und Auswählen einer Position der Peak-Position plus der symmetrischen Position auf beiden Seiten der Peak-Position als der zu interpolierende Punkt des späten Wegs, Ausführen des Eliminierens des Interferenzvorgangs des dichten benachbarten Wegs über die drei ausgewählten, zu interpolierenden Punkte, und Auslösen der ersten Peak-Positionsanpassungseinheit (740).

11. Vorrichtung nach Anspruch 9, wobei die Vorrichtung ferner eine zweite Peak-Positionsanpassungseinheit (760) umfasst;
die Beurteilungseinheit (720) für dichte Wege ferner zu Folgendem konfiguriert ist: wenn bestimmt ist, dass kein dichter Weg in dem interpolierten und gefilterten Peak-ADP-Satz vorhanden ist, Auslösen der zweiten Peak-Positionsanpassungseinheit (760); und
die zweite Peak-Positionseinstelleinheit (760) zu Folgendem konfiguriert ist: wenn die Dichtweg-Beurteilungseinheit (720) bestimmt, dass kein dichter Weg in dem interpolierten und gefilterten Peak-ADP-Satz vorhanden ist, Ausführen der Peak-Positionsinterpolation über alle Peak-ADPs in dem Peak-ADP-Satz direkt basierend auf dem Früh-Mittel-Spät-Wegprinzip, um die Peak-Position von jedem Peak-ADP anzupassen, und Speichern der angepassten Peak-Position.

12. Vorrichtung nach Anspruch 9, wobei das Peak-ADP-Satz-Erlangungsmodul (700) ferner konfiguriert ist, um zu antworten, IIR, nach dem ADP zu filtern, und den ADP-Rauschschwellenwert gemäß den nach IIR gefilterten Daten zu berechnen.

13. Vorrichtung nach Anspruch 9, wobei die Interpolations- und Filtereinheit (710) konfiguriert ist, um den Filtervorgang über den interpolierten Peak-ADP-Satz auf die folgende Weise auszuführen:
Ausführen des Filtervorgangs über ungleich Null gültige Daten in dem interpolierten Peak-ADP, die durch Durchsuchen einer Streuwerttabelle festgelegt wurde, wobei die Streuwerttabelle die ungleich Null gültigen Daten nach dem Interpolationsvorgang speichert; oder
Ausführen des Filtervorgangs über alle Daten in dem interpolierten Peak-ADP, das durch Durchsuchen einer Auftragstabelle festgelegt wurde.

14. Vorrichtung nach Anspruch 9, wobei die benachbarte Dichtweg-Interferenz-Eliminierungseinheit (730) konfiguriert ist, um den zu interpolierenden Punkt aus jedem des frühen, mittleren und späten Wegs von jedem Peak-ADP auf die folgende Weise auszuwählen:
Auswählen der Peak-Position von jedem Peak-ADP als der zu interpolierende Punkt des mittleren Wegs, Auswählen einer Position der Peak-Position minus einer symmetrischen Position auf beiden Seiten der Peak-Position als der zu interpolierende Punkt des frühen Wegs, und Auswählen einer Position der Peak-Position plus einer symmetrischen Position auf beiden Seiten der Peak-Position als der zu interpolierende Punkt des späten Wegs.

15. Vorrichtung nach Anspruch 14, wobei die benachbarte Dichtweg-Interferenz-Eliminierungseinheit (730) konfiguriert ist, um das Eliminieren des Interferenzvorgangs des dichten benachbarten Wegs über die drei ausgewählten Punkte auszuführen, die auf die folgende Weise interpoliert werden sollen:
Übernehmen des Peak-ADP, an dem sich die drei zu interpolierenden Punkte befinden, als das einzustellende Peak-ADP, und Ausführen einer Kurvenanpassung an ein frühes-spätes benachbartes Peak-ADP, mit Ausnahme des Peak-ADP, das an den drei zu interpolierenden Punkten anzupassen ist, um Kurvenanpassungsdaten des frühen-späten benachbarten Peak-ADP zu erlangen; und
die Daten entsprechend der drei zu interpolierenden Punkte in einer Amplitude, die aus dem interpolierten und gefilterten Peak-ADP-Satz unter Abzug der Kurvenanpassungsdaten des frühen-späten benachbarten Peak-ADP gebildet ist, um die drei zu interpolierenden Punkte ohne Interferenz des dichten benachbarten Wegs zu erlangen.

## Revendications

1. Procédé de recherche multi-trajets, comprenant :
la réalisation d'un calcul de corrélation (S201) avec différents retards temporels sur un signal en bande de base reçu avec un code de brouillage local et une fréquence pilote pour obtenir un profil de retard d'amplitude (ADP) ;
la réalisation d'une sélection de crête en fonction d'un seuil de bruit d'ADP pour obtenir un profil de retard d'amplitude maximale établi (S203) ;
dans un processus de recherche multi-trajets, la réalisation d'un processus d'interpolation avec la valeur 0 sur le profil de retard d'amplitude maximale (ADP) échantillonné établi, et la réalisation d'un processus de filtrage sur le profil de retard d'amplitude maximale interpolé établi (S101) ;
la détermination de savoir si un trajet dense existe dans le profil de retard d'amplitude maximale interpolé et filtré établi, si le trajet dense existe dans le profil de retard d'amplitude maximale interpolé et filtré établi, la sélection d'un point à interpoler à partir de chacun des trajets en avance, intermédiaires et en retard de chaque profil de retard d'amplitude maximale dans le profil de retard d'amplitude maximale interpolé et filtré établi, et la réalisation d'un processus d'élimination d'interférence de trajet adjacent dense sur les trois points sélectionnés à interpoler (S 102) ; et
en fonction d'un principe de trajet en avance - intermédiaires - en retard, la réalisation d'une interpolation de position maximale sur les trois points à interpoler avant d'effectuer le processus d'élimination d'interférence de trajet adjacent dense, pour ajuster une position maximale de chaque profil de retard d'amplitude maximale et la sauvegarde de la position maximale ajustée (S103) :
la position de trajet intermédiaire étant une position de démodulation centrale de la fonction d'autocorrélation du code de brouillage et des positions de trajet en avance et en retard sont les positions de démodulation qui sont plus en avance et plus en retard que la position de trajet intermédiaire, respectivement ;
ladite réalisation d'une interpolation de position maximale en fonction d'un principe de trajet en avance - intermédiaire - en retard comprenant les étapes de détermination de la relation de phase entre la position de trajet intermédiaire et la position réelle de multi-trajets par la détermination de l'amplitude relative de l'énergie de position de trajet en avance avec l'énergie de position de trajet en retard.

2. Procédé selon la revendication 1, dans lequel, avant l'étape de réalisation du processus d'interpolation avec la valeur 0 sur le profil de retard d'amplitude échantillonné établi, le procédé comprend en outre :
la réalisation d'une réponse infinie à une impulsion, IIR, le filtrage sur le profil de retard d'amplitude et le calcul dudit seuil de bruit de profil de retard d'amplitude en fonction des données filtrées IIR (S202).

3. Procédé selon la revendication 1, dans lequel, l'étape de réalisation du processus de filtrage sur le profil de retard d'amplitude maximale interpolé établi comprend :
la réalisation du processus de filtrage sur des données valides autres que zéro dans le profil de retard d'amplitude maximale interpolé établi par la recherche d'une table de hachage, la table de hachage sauvegardant les données valides autres que zéro après le processus d'interpolation ; ou,
la réalisation du processus de filtrage sur toutes les données dans le profil de retard d'amplitude maximale interpolé établi par la recherche d'une table d'ordre.

4. Procédé selon la revendication 1, dans lequel, l'étape de sélection du point à interpoler depuis chacun des trajets en avance, intermédiaires et en retard de chaque profil de retard d'amplitude maximale comprend :
la sélection de la position maximale de chaque profil de retard d'amplitude maximale comme point à interpoler du trajet intermédiaire, la sélection d'une position de la position maximale moins une position symétrique sur les deux côtés de la position maximale comme point à interpoler du trajet en avance, et la sélection d'une position de la position maximale plus une position symétrique sur les deux côtés de la position maximale comme point à interpoler du trajet en retard.

5. Procédé selon la revendication 4, dans lequel, l'étape de réalisation du processus d'élimination d'interférence de trajet adjacent dense sur les trois points sélectionnés à interpoler comprend :
la prise du profil de retard d'amplitude maximale au niveau duquel les trois points à interpoler sont situés comme profil de retard d'amplitude maximale à ajuster, et la réalisation d'un ajustement de courbe sur un profil de retard d'amplitude maximale adjacent en avance - en retard à l'exception du profil de retard d'amplitude maximale à ajuster au niveau des trois points à interpoler, pour obtenir des données d'ajustement de courbe du profil de retard d'amplitude maximale adjacent en avance - en retard ; et
les données correspondant aux trois points à interpoler dans une enveloppe formée à partir du profil de retard d'amplitude maximale interpolé et filtré déduction faite respectivement des données d'ajustement de courbe du profil de retard d'amplitude maximale adjacent en avance - en retard, pour obtenir les trois points à interpoler sans interférence de trajet adjacent dense.

6. Procédé selon la revendication 1, dans lequel, après l'étape de sauvegarde de la position maximale ajustée, le procédé comprend en outre :
la détermination de savoir si des temps du processus d'élimination d'interférence de trajet adjacent dense atteignent des moments seuils d'une interférence de trajet adjacent dense d'élimination prédéfini, si les moments atteignent les temps de seuil, terminant le débit ; et si les temps n'atteignent pas les temps de seuil, la sélection de la position maximale ajustée de chaque profil de retard d'amplitude maximale comme point à interpoler du trajet intermédiaire, la sélection d'une position de la position maximale moins la position symétrique sur les deux côtés de la position maximale comme point à interpoler du trajet en avance, la sélection d'une position de la position maximale plus la position symétrique sur les deux côtés de la position maximale comme point à interpoler du trajet en retard, la réalisation du processus d'élimination d'interférence du trajet adjacent dense sur les trois points sélectionnés à interpoler, et le retour à l'étape de réalisation de l'interpolation de la position maximale sur les trois points à interpoler.

7. Procédé selon la revendication 1, dans lequel, après l'étape de réalisation du processus de filtrage sur le profil de retard d'amplitude maximale interpolé établi, le procédé comprend en outre :
lorsqu'il n'existe pas de trajet dense dans le profil de retard d'amplitude maximale interpolé et filtré établi, la réalisation de l'interpolation de position maximale sur tous les profils de retard d'amplitude maximale dans le profil de retard d'amplitude maximale établi directement en fonction du principe de trajet en avance - intermédiaire - en retard, pour ajuster la position maximale de chaque profil de retard d'amplitude maximale, et la sauvegarde de la position maximale ajustée.

8. Procédé selon la revendication 4 ou 6, dans lequel :
la position symétrique sur les deux côtés de la position maximale est de 1/2 élément.

9. Appareil de recherche multi-trajets, comprenant :
un module d'obtention de profil de retard d'amplitude maximale établi (700), qui est conçu pour : effectuer un calcul de corrélation avec des retards temporels différents sur un signal de bande de base reçu avec un code de brouillage local et une fréquence pilote pour obtenir un profil de retard d'amplitude (ADP) ; et effectuer une sélection de crête en fonction d'un seuil de bruit d'ADP pour obtenir un profil de retard d'amplitude maximale établi ;
une unité d'interpolation et filtrage (710), qui est conçue pour : dans un processus de recherche multi-trajets, effectuer un processus d'interpolation avec la valeur 0 sur le profil de retard d'amplitude (ADP) maximale échantillonné établi, et effectuer un processus de filtrage sur le profil de retard d'amplitude maximale interpolé établi ;
une unité de détermination de trajet dense (720), qui est conçue pour : déterminer si un trajet dense existe dans le profil de retard d'amplitude maximale interpolé et filtré établi, si le trajet dense existe dans le profil de retard d'amplitude maximale interpolé et filtré établi, déclencher une unité d'élimination d'interférence de trajet adjacent dense (730) ;
l'unité d'élimination d'interférence de trajet adjacent dense (730), qui est conçue pour : lorsque l'unité de détermination de trajet dense (720) détermine que le trajet dense existe dans le profil de retard d'amplitude maximale interpolé et filtré établi, sélectionner un point à interpoler à partir de chacun des trajets en avance, intermédiaires et en retard de chaque profil de retard d'amplitude maximale dans le profil de retard d'amplitude maximale interpolé et filtré établi, et effectuer un processus d'élimination d'interférence de trajet adjacent dense sur les trois points sélectionnés à interpoler ; et
une première unité d'ajustement de position maximale (740), qui est conçue pour : en fonction d'un principe de trajet en avance - intermédiaire - en retard, effectuer une interpolation de position maximale sur les trois points à interpoler après avoir effectué le processus d'élimination d'interférence de trajet adjacent dense, pour ajuster une position maximale de chaque profil de retard d'amplitude maximale et sauvegarder la position maximale ajustée ;
la position de trajet intermédiaire constituant la position de démodulation centrale de la fonction d'autocorrélation du code de brouillage et des positions de trajet en avance et en retard constituant les positions de démodulation qui sont plus en avance et plus en retard que la position de trajet intermédiaire, respectivement ;
ladite réalisation d'une interpolation de position maximale en fonction d'un principe de trajet en avance - intermédiaire - en retard comprenant les étapes de détermination de la relation de phase entre la position de trajet intermédiaire et la position réelle de multi-trajets par la détermination de l'amplitude relative de l'énergie de position de trajet en avance avec l'énergie de position de trajet en retard.

10. Appareil selon la revendication 9, l'appareil comprenant en outre une unité de détermination de seuil (750) ;
la première unité d'ajustement de position maximale (740) étant en outre conçue pour : déclencher l'unité de détermination de seuil (750) après avoir sauvegardé la position maximale ajustée ; et
l'unité de détermination de seuil (750) étant conçue pour : déterminer si des temps du processus d'élimination d'interférence de trajet adjacent dense atteignent des temps de seuil prédéterminés d'élimination d'interférence de trajet adjacent dense, si les temps atteignent les temps de seuil, terminer le débit ; et si les temps n'atteignent pas les temps de seuil, sélectionner la position maximale ajustée de chaque profil de retard d'amplitude maximale comme point à interpoler du trajet intermédiaire, sélectionner une position de la position maximale moins la position symétrique sur les deux côtés de la position maximale comme point à interpoler du trajet en avance, sélectionner une position de la position maximale plus la position symétrique sur les deux côtés de la position maximale comme point à interpoler du trajet en retard, effectuer le processus d'élimination d'interférence de trajet adjacent dense sur les trois points sélectionnés à interpoler et déclencher la première unité d'ajustement de position maximale (740).

11. Appareil selon la revendication 9, l'appareil comprenant en outre une deuxième unité d'ajustement de position maximale (760) ;
l'unité de détermination de trajet dense (720) étant en outre conçue pour : si l'on détermine qu'aucun trajet dense n'existe dans le profil de retard d'amplitude maximale interpolé et filtré établi, déclencher la deuxième unité d'ajustement de position maximale (760) ; et
la deuxième unité d'ajustement de position maximale (760) étant en outre conçue pour : lorsque l'unité de détermination de trajet dense (720) détermine qu'il n'existe aucun trajet dense dans le profil de retard d'amplitude maximale interpolé et filtré établi, effectuer l'interpolation de position maximale sur tous les profils de retard d'amplitude maximale dans le profil de retard d'amplitude maximale établi directement en fonction du principe de trajet en avance - intermédiaire - en retard, pour ajuster la position maximale de chaque profil de retard d'amplitude maximale et sauvegarder la position maximale ajustée.

12. Appareil selon la revendication 9, dans lequel ledit module d'obtention de profil de retard d'amplitude maximale établi (700), conçu en outre pour effectuer une réponse infinie à une impulsion (IIR), filtrer sur l'ADP et calculer ledit seuil de bruit d'ADP en fonction des données filtrées IIR.

13. Appareil selon la revendication 9, dans lequel, l'unité d'interpolation et filtrage (710) est conçue pour effectuer le processus de filtrage sur le profil de retard d'amplitude maximale interpolé établi de la manière suivante :
la réalisation du processus de filtrage sur des données valides autres que zéro dans le profil de retard d'amplitude maximale interpolé établi par la recherche d'une table (table de hachage, la table de hachage sauvegardant les données valides autres que zéro après le processus d'interpolation ; ou
la réalisation du processus de filtrage sur toutes les données dans le profil de retard d'amplitude maximale interpolé établi par la recherche d'une table d'ordre.

14. Appareil selon la revendication 9, dans lequel, l'unité d'élimination d'interférence de trajet adjacent dense (730) est conçue pour sélectionner le point à à interpoler depuis chacun des trajets en avance, intermédiaires et en retard de chaque profil de retard d'amplitude maximale de la manière suivante :
la sélection de la position maximale de chaque profil de retard d'amplitude maximale comme point à interpoler du trajet intermédiaire, la sélection d'une position de la position maximale moins une position symétrique sur les deux côtés de la position maximale comme point à interpoler du trajet en avance, et la sélection d'une position de la position maximale plus une position symétrique sur les deux côtés de la position maximale comme point à interpoler du trajet en retard.

15. Appareil selon la revendication 14, dans lequel, l'unité d'élimination d'interférence de trajet adjacent dense (730) est conçue pour effectuer le processus d'élimination d'interférence de trajet adjacent dense sur les trois points sélectionnés à interpoler de la manière suivante :
la prise du profil de retard d'amplitude maximale au niveau duquel les trois points à interpoler sont situés comme profil de retard d'amplitude maximale à ajuster, et la réalisation d'un ajustement de courbe sur un profil de retard d'amplitude maximale adjacent en avance - en retard à l'exception du profil de retard d'amplitude maximale à ajuster au niveau des trois points à interpoler, pour obtenir des données d'ajustement de courbe du profil de retard d'amplitude maximale adjacent en avance - en retard ; et
les données correspondant aux trois points à interpoler dans une enveloppe formée à partir du profil de retard d'amplitude maximale interpolé et filtré établi déduction faite respectivement des données d'ajustement de courbe du profil de retard d'amplitude maximale adjacent en avance - en retard, pour obtenir les trois points à interpoler sans interférence de trajet adjacent dense.
